# EUROPEAN PATENT APPLICATION

(11) **EP 2 472 297 A1**
(43) Date of publication of application: **04.07.2012**
(21) Application number: 11190515.4
(22) Date of filing: 24.11.2011
(51) Int. Cl.: G02B 6/00, G02B 6/24, A41D 27/08, D03D 15/00

(54) **Method of production of laterally emissive light guides, a light guide and an optically active textile using these light guides**

(30) Priority: 28.12.2010 CZ 20100975
(71) Applicant: Technicka Univerzita V Liberci, 461 17 Liberec 1 (CZ)
(72) Inventor: Kopecký, Václav, 46015 Liberec (CZ); Kremenáková, Dana, 46006 Liberec (CZ); Lédl, Vít, 46001 Liberec (CZ); Militký, Jirí, 46006 Liberec (CZ); Václavík, Jan, 46006 Liberec (CZ)
(74) Representative: Musil, Dobroslav

(57) **Abstract**

The invention relates to the method of improving the effect of a laterally light emitting light guide (3) that is created with a light-conducting fibre or a bundle of light-conducting fibres which is with one end connected to the source (2) of light whereas the other end (31) is fitted with a reflective closure (32, 33) whereas in the first step a flat or spherical surface is created at the end of the light guide (3) and in the second step this surface is polished and a reflective layer is applied on the polished surface.

The invention also relates to a laterally light emitting light guide (3) and optically active textile which contains it.

## Description

### Field of application

The present invention relates to the method of improving the effect of a laterally light emitting light guide created with a light-conducting fibre or a bundle of light-conducting fibres which is connected to a light source with one end whereas its other end is fitted with a reflective closure. The invention also relates to a light guide manufactured in the mentioned way and optically active textile which uses the light guides.

### Prior art

Laterally emitting light-conducting fibres and their bundles are used for example in optically active textiles. They are made as a structure of separate light-conducting fibres or these fibres are woven into a standard textile. Considering the field of use of these textiles, the intensity of light emitted by a certain part of textile used in a garment is very important as well as even luminous intensity along the whole length of the fibre, if possible. The absolute intensity of emitted light is naturally given by the intensity of a light source attached on the inlet of a light-conducting fibre or a bundle of fibres. The evenness of light emission along the whole length of the fibre however depends on the properties of the fibre and its construction.

At light-conducting fibres which are designed to transfer light from a source to the place of emission without any loss if possible, it is important that there are no light losses along the whole length of the fibre, i.e. the light beams stay closed within the shell of the fibre.

On contrary, other types of light-conducting fibres shall possibly emit the light along its whole length. It especially relates to protective warning garments etc., used under low visibility conditions. In some cases, it is generally important that the intensity of light emitted through the wall is constant along the whole length of the fibre.

The main reason why this requirement is difficult to meet is the amount of light which emanates from the front part at the end of the fibre. Apart from the fact that the requirement for constant luminous intensity along the whole length of the fibre is not met, the useless emission of light at the end of the fibre opposite the attached source of light means a loss of energy.

Document CN 2863827 suggests to place sources of light to both ends of the fibre. It increases production costs, moreover, considering the design of a final product, it is not always possible to attach light sources with appropriate electrical wiring to both ends of fibres.

DE 10323 472 A1 suggests a similar solution.

The solution according to DE 202006006387 U1 suggests a possibility to prevent the light from emitting at the end of the fibre, or a bundle of light-conducting fibres, using a mirror surface attached to the end opposite the attached source of light. No particular realization is described.

The objective of the present invention is to design a laterally light emitting light guide comprising a light-conducting fibre or a bundle of light-conducting fibres with emission substantially less reduced along its length in the direction from the attached light source in comparison to fibres according to prior art. The objective also includes designing an economically relevant process for the production of such a laterally light emitting light guide which would have a reasonable operational life and physiomechanical properties suitable for the use in optically active textiles.

### Summary of the Invention

The objective of the invention is achieved by improving the effect of a laterally light emitting light guide created with a light-conducting fibre or a bundle of light-conducting fibres whereas the principle is that in the first step a flat or spherical surface is made at the end of the light guide and in the second step this surface is polished and a reflective layer is applied on the polished surface. Thus the required shape of the reflective layer and its high efficiency can be acquired.

It is suitable to apply the reflective layer by steaming or sputtering. Layers thus created are of high quality whereas the technology is proved from other areas of the production of optical devices.

The objective of the invention is also achieved by a laterally light emitting light guide which is based on light-conducting fibres made of plastic, whereas the reflective device is created with a reflective layer which is attached to the front of the light guide by steaming or sputtering.

The light guides have very good luminous intensity, the drop of emission intensity along the length is small. The production costs for the application of reflective layers according to the invention are acceptable and the reflective layers have the required life span.

The reflective layers are advantageously made from nickel and/or chrome and/or aluminium and/or silver.

Other advantageous reflective surfaces are created with dielectric multi-layer systems.

The objective of the invention is also achieved by optically active textile comprising at least one light guide according to patent claims 4 to 7 of the present invention. The light guide or light guides create required effects which can be used on parts of clothing as passive safety warning devices for example for traffic participants, or for individuals working in certain work environments.

### List of figures in the drawing

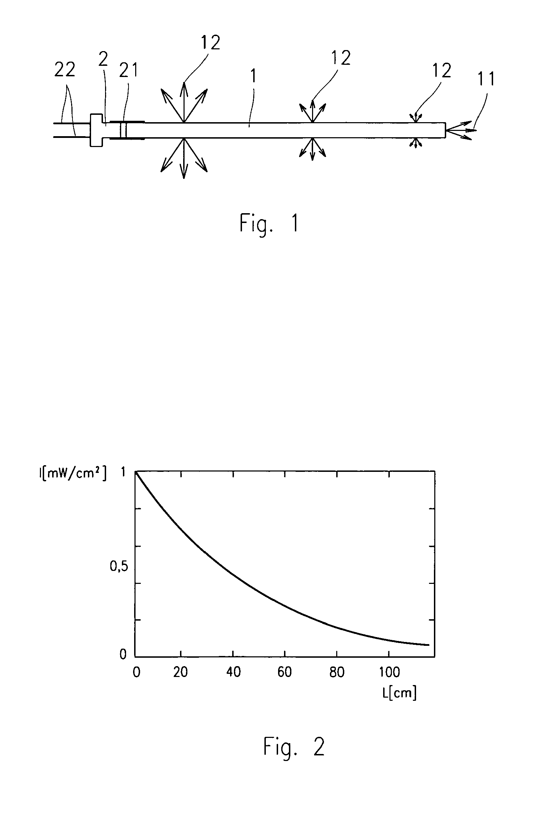

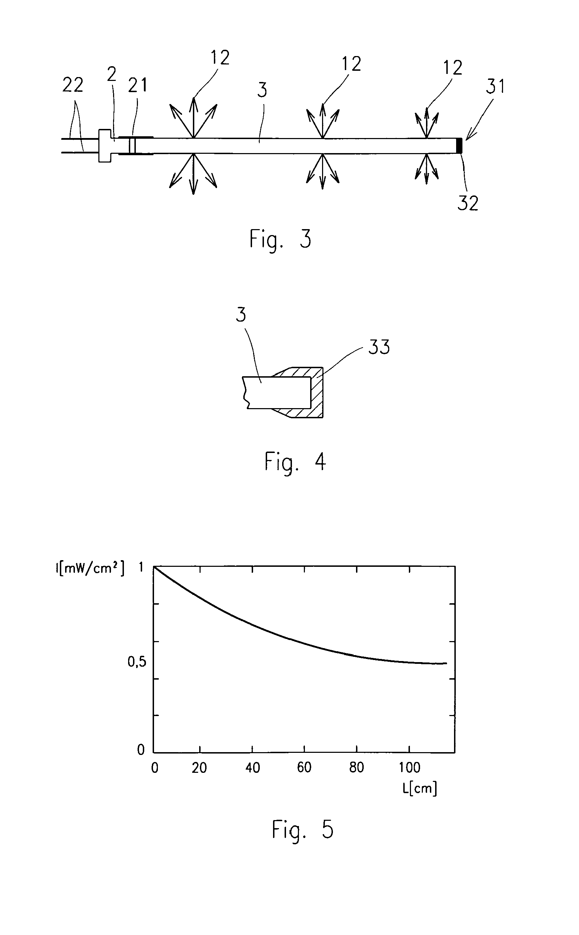

Examples of designs of a bundle of light-conducting fibres and their properties are schematically depicted in the drawing where following figures show: fig. 1 a bundle of light-conducting fibres according to prior art, fig. 2 the intensity of emission along the fibre versus the distance from the light source in the design from fig. 1 (prior art), fig. 3 a bundle of light-conducting fibres according to the present invention, fig. 4 an alternative design of the end of a fibre bundle for fig. 3 and fig. 5 the intensity of emission along the fibre versus the distance from the light source as designed in fig. 3 and 4.

### Examples of the invention

In term of this document, laterally light emitting light guides are separate light-conducting fibres or their bundles.

On its inlet, the light guide **1** is fitted with a light source **2** which is advantageously an electroluminescent diode LED. The LED is mounted on the inlet end of the light guide **1**, whereas the connection is fitted with the shield **21** to prevent light emitting in the place of the connection. The other end of the light guide **1** according to prior art (fig. 1) is usually open and enables the output of luminous radiation (arrows **11**) from the front of the light guide **1**.

The inner body of the laterally light emitting light guide **1** comprises scattered particles which deflect small portions of passing light which then emanate from the surface of the light guide. Laterally light emitting light guides **1** of a different design have their shell disturbed in a define way so that the light guide **1** emits light laterally. As a result of light emission along the whole length of the light guide **1** the intensity of laterally emitted light decreases in direction from the light source **2.** Considering the open front of the light guide **1**, the intensity drop is substantially bigger then it would correspond solely to lateral emission. The intensity drop is illustrated with arrows **12** in the direction of lateral emission. If the light emanating from the open front of the light guide **1** is not used, this unwanted intensity drop of lateral light emission is also accompanied by a loss of energy. The intensity drop **I** of laterally emitted light relative to the unit of area of the outer surface of the light guide **1** versus the distance **L** from the light source **2** is illustrated in the chart in fig. 2. It is obvious that in one meter distance from the light source the intensity **1** of laterally emitted light decreases practically to zero.

In fig. 3 there is an illustration of a laterally light emitting light guide **3** according to the invention with the end **31** reverse to the light source **2** fitted with a closure **32** which has, in the direction inward the light guide **3,** a reflective surface covering the front. It is apparent that the light reflected by the reflective surface of the closure **32** back to the interior space of the light guide **3** increases the amount of light available for lateral emission. According to fig. 5, in this case the intensity of laterally emitted light in one meter distance from the light source decreases to circa half of the intensity which is in the vicinity of the light source **2.**

In fig. 4 there is an alternative design of the closure **33** which is, in the direction inward the light guide **3,** equipped with a reflective surface, whereas the closure **33** has a shape of a cap covering the front of the light guide **3** as well as a part of its cylindrical surface.

The connection of the light guide **3** with the reflective closure comprising a reflective foil and alike is technically difficult.

According to the invention, the closure **32,** and **33** if appropriate, of the light guide 3 is created by a coating applied on the relevant part of the light guide **3.**

In the first step, the surface of the front of the light guide **1**, comprising glass or plastic light-conducting fibres or a fibre intended for coating, is polished, for example using diamond powder, to remove the marks after a separating tool. During that, a flat or spherical surface is made using a state-of-the-art method.

In the second step, the surface created this way is in vacuum steamed with aluminium, chrome, nickel, silver and alike, or with their alloys. This reflective layer may be further fitted with a protective layer from the outer side, for example made from SiO₂ or MgF₂.

Sputtering in vacuum is an alternative method to make the reflective layer according to the invention. The resulting reflective layer on the free front of the light guide **3** has similarly convenient properties like the layer made by steaming.

In another design, the reflective layer made by steaming or sputtering comprises multi-layer coating containing ultra thin dielectric layers. The state-of-the-art dielectric layers are based on SiO₂, TiO₂, etc.

In case the reflective layer is made on the front part of a separate light-conducting fibre, which may have only several tenths of a millimetre in diameter, the end of the fibre is cemented into a cavity with a suitable diameter made of material with same or similar properties to those of a processed light-conducting fibre. The whole is then finely ground and subsequently polished on a polyurethane pad into the required shape of surface. Polishing is done using for example diamond powder.

The light guides **3** according to the invention are especially intended for the production of optically active textiles for the manufacture of warning garments or their parts for the traffic police, drivers of motor and non-motor vehicles, mountain rescuers etc. Continuous luminous surfaces, stripes, surface patterns etc. can be made on the surface of clothing by weaving in the light guides **3.** If the inlet parts of the light guides **3** are appropriately arranged, power supplies **22** of light sources **2** of particular light guides **3** can be easily interconnected and combined in an input to a supply accumulator etc.

The even intensity of lateral emission of the light guides **3** according to the invention substantially extends their use because it gives new possibilities to create patterns, inscriptions, signs etc. It has also the advantage of absolutely bigger intensity of emitted light and the increase of energetic efficiency of the light guides **3.**

### List of symbols

- 1: light guide (according to prior art)
- 11: arrow (in the direction of light emanating from the front of the light guide according to prior art)
- 12: arrow (in the direction of lateral emission)
- 2: light source
- 21: shield (of the connection of the light source and the inlet to the light guide)
- 22: power supply (of the light source)
- 3: light guide (according to the invention)
- 31: the end of the light guide reverse to the light source
- 32: reflective closure (of the end of the light guide reverse to the light source)
- 33: reflective closure (of the end of the light guide reverse to the light source)
- I: intensity of emitted light
- L: distance of the place of emitted light from the light source

## Claims

1. The method of improving the effect of a laterally light emitting light guide (3) comprising a light-conducting fibre or a bundle of light-conducting fibres which is with one end connected to the source (2) of light whereas the other end (31) is fitted with a reflective closure (32, 33) **characterized in that** in the first step a flat or spherical surface is created at the end of the light guide (3) and in the second step this surface is polished and a reflective layer is applied on the polished surface.

2. The method according to claim 1 **characterized in that** the reflective layer is applied by steaming.

3. The method according to claim 1 **characterized in that** the reflective layer is applied by sputtering.

4. The laterally light emitting light guide (3) created with a light-conducting fibre or a bundle of light-conducting fibres which is with one end connected to the source (2) of luminous radiation whereas the other end is fitted with a reflective means **characterized in that** the light-conducting fibres are made of plastic whereas the reflective means is created with a reflective layer which is connected to the front of the light guide (3) by steaming.

5. The laterally light emitting light guide (3) created with a light-conducting fibre or a bundle of light-conducting fibres which is with one end connected to the source (2) of luminous radiation whereas the other end is fitted with a reflective means **characterized in that** the light-conducting fibres are made of plastic whereas the reflective means is created with a reflective layer which is connected to the front of the light guide (3) by sputtering.

6. The laterally light emitting light guide (3) according to claim 4 or 5 **characterized in that** the reflective layer is made of nickel and/or chrome and/or aluminium and/or silver.

7. The laterally light emitting light guide (3) according to claim 4 or 5 **characterized in that** the reflective layer is created with a dielectric multi-layer system.

8. Optically active textile comprising at least one light guide (3) according to any of claims 4 to 7.
